(19) **Europäisches Patentamt / European Patent Office / Office européen des brevets**

(11) **EP 4 491 690 A1**

(12) **EUROPEAN PATENT APPLICATION**
published in accordance with Art. 153(4) EPC

(43) Date of publication:
**15.01.2025 Bulletin 2025/03**

(21) Application number: **23766601.1**

(22) Date of filing: **24.02.2023**

(51) International Patent Classification (IPC):
$C09D\ 201/00^{(2006.01)}$    $F28F\ 19/04^{(2006.01)}$
$C09D\ 7/61^{(2018.01)}$    $C09D\ 7/63^{(2018.01)}$
$C23C\ 26/00^{(2006.01)}$

(52) Cooperative Patent Classification (CPC):
**C09D 7/61; C09D 7/63; C09D 201/00; C23C 26/00; F28F 19/04**

(86) International application number:
**PCT/JP2023/006835**

(87) International publication number:
**WO 2023/171423 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.03.2022 JP 2022036490**

(71) Applicant: **Nihon Parkerizing Co., Ltd.
Tokyo 103-0027 (JP)**

(72) Inventors:
• **KAWAMURA, Kenta**
  **Tokyo 103-0027 (JP)**
• **SATO, Takeshi**
  **Tokyo 103-0027 (JP)**
• **YAMASHITA, Tsuyoki**
  **Tokyo 103-0027 (JP)**
• **IKO, Tomohiro**
  **Tokyo 103-0027 (JP)**

(74) Representative: **Arnold & Siedsma
Bezuidenhoutseweg 57
2594 AC The Hague (NL)**

(54) **WATER-BASED SURFACE TREATMENT COMPOSITION FOR ALUMINUM MATERIAL**

(57)    An aqueous surface treatment composition for an aluminum material capable of forming a film having excellent corrosion resistance, in particular, pitting corrosion resistance is provided. An aqueous surface treatment composition (X) for an aluminum material contains a resin (A) having a glass transition temperature of 35 °C or higher and a tensile storage modulus at 25 °C of 200 MPa or more and 2000 MPa or less.

**EP 4 491 690 A1**

**Description**

FIELD OF THE INVENTION

The present invention relates to an aqueous surface treatment composition for an aluminum material. The present invention also relates to a surface treatment film for an aluminum material and a surface treated aluminum material.

BACKGROUND OF THE INVENTION

Aluminum material is used for various industrial purposes because of its light specific gravity. In particular, it is used in transportation applications such as automobiles, aircraft, and railways, as well as in power industries using natural energy such as offshore wind power industry, geothermal energy industry, and ammonia fuel industry. However, corrosion, in particular, pitting corrosion, is an important problem for aluminum materials used in environments containing Cl, and corrosion prevention of aluminum materials is required in the aluminum industry.
Surface treatment is one effective approach to achieving corrosion protection. It is well known that corrosion can be prevented by subjecting aluminum materials to anodic oxidation treatment, chromate treatment, or the like. However, there are problems with these treatment methods, including the high processing cost required for treatment equipment and the fact that they involve compounds that cause pollution, such as hexavalent chromium.
Against this background, chemical conversion treatment methods that do not use hexavalent chromium have been proposed.
Patent Literature 1 discloses a surface treatment agent for metals, which is an aqueous liquid with a pH of 2.5 to 6, comprising: (a) 1 to 5000 mass ppm of a fluorine-based compound of one or more metals selected from Zr, Ti, and Hf as metal ions; (b) 1 to 5000 mass ppm of trivalent Cr ions; (c) 1 to 5000 mass ppm of one or more metal ions selected from Fe, Co, Zn, Mn, Mg, Ca, Sr, Al, Sn, Ce, Mo, W, Nb, Y, and La; and (d) 1 to 10,000 ppm by mass of a compound having at least one amidino group in the molecule.
Patent Literature 2 discloses a chromium-free surface treatment composition for aluminum and aluminum alloys, which comprises a lithium compound, a carbonate compound, and an oxidizing agent, and has excellent corrosion resistance, especially pitting corrosion resistance.
Patent Literature 3 discloses a zinc-aluminum alloy plated steel sheet having a lubricating resin layer with an average thickness of 0.5 to 4 $\mu$m on at least one surface as an upper layer of a plating layer, characterized in that the lubricating resin layer comprises 50 to 95% by mass of a polyurethane resin as a main component, and comprises a total of 5 to 50% by mass of one or more resins selected from acrylic-styrenic resins, phenolic resins, and epoxy resins having an acid value of less than 10, and wherein the lubricating resin layer further comprises a zirconium compound. Patent Literature 4 discloses a metal surface treatment composition containing a urethane resin obtained by reacting a urethane prepolymer with at least one of water and a polyamine compound that does not contain a tertiary amine, wherein the urethane prepolymer is obtained by reacting a polyisocyanate (A) having a cyclohexane ring structure, a polyol (B) containing no nitrogen atom and containing a benzene ring, a diol (C) with a weight average molecular weight of more than 600 that does not contain a benzene ring or a nitrogen atom, a diol (D) having a weight average molecular weight of 500 or less that does not contain a benzene ring or a nitrogen atom, and a tertiary amine compound (E) having two or more active hydrogens.

PRIOR ART

Patent Literature

[Patent Literature 1] Japanese Patent Application Publication No. 2007-239016
[Patent Literature 2] Japanese Patent Application Publication No. 2005-008948
[Patent Literature 3] Japanese Patent Application Publication No. 2009-107311
[Patent Literature 4] WO 2017/081731 A1

SUMMARY OF THE INVENTION

However, chemical conversion treatment methods generally have problems such as insufficient corrosion resistance. For example, regarding the corrosion resistance of Patent Literature 1, the corrosion resistance of an aluminum die-cast plate is only confirmed by a neutral salt spray test (NSS) to measure the rust area ratio after 120 hours, which is an evaluation in a relatively mild corrosive environment and in a short period of time. If the corrosion resistance is insufficient, localized corrosion such as pitting corrosion will occur in defective areas of the film. Because pitting corrosion progresses deeply, it is more harmful to aluminum materials than when uniform corrosion occurs. Furthermore, regarding the corrosion resistance of Patent Literature 2, although NSS was performed and excellent corrosion resistance was shown even after 250 hours, corrosion resistance in a severer corrosive environment (for example, acidic environment) has not been confirmed. Regarding the corrosion resistance of Patent Literature 3 and Patent Literature 4, excellent corrosion resistance after 240 hours in NSS has been confirmed, but corrosion resistance in a severer corrosive environment (for example, an acidic environment) has not been confirmed. Accordingly, in one embodiment, an object of the present invention is to provide an aqueous surface treatment composition for an aluminum material capable of forming a film having excellent corrosion resistance, in particular, pitting corrosion resistance. In a further embodiment, an object of the present invention is to provide a surface treatment film for an aluminum material and a surface treated aluminum material.

As a result of intensive studies to solve the above problems, the present inventors have discovered that, an aqueous surface treatment agent comprising a resin (A) whose glass transition temperature is 35 °C or higher and whose tensile storage modulus at 25 °C is 200 MPa or more and 2000 MPa or less, is capable of forming a film with excellent corrosion resistance, in particular, pitting corrosion resistance on or above the surface of an aluminum material. The present invention has thus been completed.

Accordingly, the present invention is exemplified as follows.

[1] An aqueous surface treatment composition (X) for an aluminum material, comprising a resin (A) having a glass transition temperature of 35 °C or higher and a tensile storage modulus at 25 °C of 200 MPa or more and 2000 MPa or less.

[2] The aqueous surface treatment composition (X) for an aluminum material according to [1], wherein the resin (A) has a molecular weight between crosslinking points of 450 or more and 4,500 or less.

[3] The aqueous surface treatment composition (X) for an aluminum material according to [1] or [2], further comprising an inorganic compound (B), wherein a mass ratio (inorganic compound (B) / resin (A)) of the inorganic compound (B) to the resin (A) is 0.05 or more and 1.0 or less.

[4] The aqueous surface treatment composition (X) for an aluminum material according to [3], wherein the inorganic compound (B) comprises at least one element selected from Si, Ti, and Zr.

[5] The aqueous surface treatment composition (X) for an aluminum material according to any one of [1] to [4], further comprising an organic compound (C) having at least one functional group selected from an epoxy group, an amino group, an oxazoline group, and a carbodiimide group, wherein a mass ratio (organic compound (C) / resin (A)) of the organic compound (C) to the resin (A) is 0.05 or more and 1.0 or less.

[6] The aqueous surface treatment composition (X) for an aluminum material according to any one of [1] to [5], wherein a concentration of the resin (A) in a total solid content is 25% by mass or more and 90% by mass or less.

[7] The aqueous surface treatment composition (X) for an aluminum material according to any one of [1] to [6], wherein a minimum film-forming temperature is 10 °C or higher and 70 °C or lower.

[8] A surface treatment film for an aluminum material, comprising a resin (A) having a glass transition temperature of 35 °C or higher and a tensile storage modulus at 25°C of 200 MPa or more and 2000 MPa or less.

[9] The surface treatment film for an aluminum material according to [8], wherein the resin (A) has a molecular weight between crosslinking points of 450 or more and 4,500 or less.

[10] The surface treatment film for an aluminum material according to [8] or [9], further comprising an inorganic compound (B), wherein a mass ratio (inorganic compound (B) / resin (A)) of the inorganic compound (B) to the resin (A) is 0.05 or more and 1.0 or less.

[11] The surface treatment film for an aluminum material according to any one of [8] to [10], further comprising an organic compound (C) having at least one functional group selected from an epoxy group, an amino group, an oxazoline group, and a carbodiimide group, wherein a mass ratio (organic compound (C) / resin (A)) of the organic compound (C) to the resin (A) is 0.05 or more and 1.0 or less.

[12] The surface treatment film for an aluminum material according to any one of [8] to [11], wherein a ratio (E'25°C / E'120°C) of the tensile storage modulus measured at 25 °C (E'25°C) to a tensile storage modulus measured at 120 °C (E'120°C) is 10 or more and 500 or less.

[13] The surface treatment film for an aluminum material according to any one of [8] to [12], wherein a surface has a water contact angle of 40° or more and 100° or less.

[14] A surface treated aluminum material, comprising the surface treatment film for an aluminum material according to any one of [8] to [13], with a film thickness of 0.2 μm or more and 5 μm or less.

[15] The surface treated aluminum material according to [14], further comprising another film with a film thickness of 0.4 μm or more and 5 μm or less obtained by contacting on or above a surface of the surface treatment film with another surface treatment composition (Y) and then drying at 100 °C or more and 250 °C or less.

[16] The surface treated aluminum material according to [15], wherein the surface treatment composition (Y) has a surface tension of 20 mN/m or more and 50 mN/m or less.

According to one embodiment of the invention, it is possible to provide an aqueous surface treatment composition for an aluminum material capable of forming a film having excellent corrosion resistance, in particular, pitting corrosion resistance on or above the surface of aluminum material.

DETAILED DESCRIPTION OF THE INVENTION

<1. Surface treatment composition (X) and surface treatment film>

According to one embodiment of the present invention, there is provided an aqueous surface treatment composition (X) for an aluminum material, comprising a resin (A) having a glass transition temperature of 35 °C or higher and a tensile storage modulus at 25 °C of 200 MPa or more and 2000 MPa or less. Further, according to another embodiment of the present invention, there is provided a surface treatment film for an aluminum material, comprising a resin (A) having a glass transition temperature of 35 °C or higher and a tensile storage modulus at 25 °C of 200 MPa or more and 2000 MPa or less.

The lower limit of the glass transition temperature of the resin (A) is preferably 35 °C or higher, more preferably 55 °C or higher, and even more preferably 75 °C or higher. The upper limit of the glass transition temperature of the resin (A) is preferably 120 °C or lower, more preferably 110 °C or lower, and even more preferably 100 °C or lower.

The tensile storage modulus of the resin (A) at 25 °C is preferably 200 MPa or more and 2000 MPa or less. The lower limit of the tensile storage modulus of the resin (A) at 25 °C is more preferably 300 MPa or more, and even more preferably 500 MPa or more. The upper limit of the tensile storage modulus of the resin (A) at 25 °C is more preferably 1900 MPa or less, and even more preferably 1800 MPa or less. If the tensile storage modulus is less than 200 MPa, the film becomes sticky and does not have adhesion to aluminum. If it exceeds 2000 MPa, the film becomes too hard, and in this case, adhesion of the film cannot be obtained after being subjected to press working or the like.

The glass transition temperature and tensile storage modulus of resin (A) are measured by the method shown in JIS-K-7244-1:1998. Specifically, it is measured by performing a temperature dispersion measurement of a film-like test piece in a tensile mode using dynamic viscoelasticity measurement. The storage modulus and loss modulus of the test piece at each temperature are determined by applying tensile stress (50.0 N) and periodic vibration (10.0 Hz) to a test piece of width 4.0 mm × length 50.0 mm × thickness approximately 0.5 mm, and measuring the stress and phase difference while sweeping the temperature in the range from -20 °C to 200 °C at a heating rate of 5.0 °C/min. The storage modulus is an elastic term, the loss modulus is a viscous term, and the glass transition temperature represents a change in phase structure. Therefore, the temperature at which $\tan \delta$ = loss modulus / storage modulus becomes maximum is the glass transition temperature. Storage modulus is the force that immediately responds when an external stimulus is applied such as the hardness of a film. On the other hand, the loss modulus is a force that diffuses against external stimulus, and can be compared to a viscous component. Regarding the glass transition temperature, on the low temperature side of the transition region, elasticity is dominant and is called a glass region, and on the high temperature side, viscosity is dominant and it is called a rubber region. In the present invention, when multiple glass transition temperatures are confirmed for a copolymer resin or the like, the temperature on the lower temperature side is defined as the glass transition temperature of the resin.

As the resin (A), it is not particularly limited as long as it has a glass transition temperature of 35 °C or higher and a tensile storage modulus at 25 °C of 200 MPa or more and 2000 MPa or less, and examples thereof include urethane resin, acrylic resin, epoxy resin, ester resin, amide resin, vinyl resin, silicone resin, and polyvinyl alcohol. The resin (A) may be a monopolymer (including modified products in which the side chain of the monopolymer is modified with another compounds), or may be a copolymer obtained by polymerizing a combination of two or more types of monomers for obtaining these resins or modified products thereof. Further, as the resin (A), one type may be used alone, or two or more types may be used in combination.

Among these, the resin (A) is preferably an anionic resin having a carboxy group and/or a sulfo group. As long as it has these functional groups, it may have other functional groups such as an amino group, an amide group, a hydroxy group, or the like in its molecular structure. Furthermore, the lower limit of the weight average molecular weight of the resin (A) is preferably 2,000 or more, more preferably 4,000 or more, and even more preferably 10,000 or more. The upper limit of the weight average molecular weight of the resin (A) is preferably 1,000,000 or less, more preferably 800,000 or less, and even more preferably 500,000 or less. One type of the resin (A) may have one type of these functional groups, or may have two or more types of these functional groups.

In the present invention, the weight average molecular weight of the resin (A) is measured by a GPC method. The weight average molecular weight in the Examples was measured under the following conditions.

Measurement was conducted using a high-speed GPC device (HLC-8320GPC: manufactured by Tosoh Corporation), and the weight average molecular weight was determined using a combination of an SEC column and a guard column. The measurement was conducted under the following conditions.

SEC column: TSKgel Super AWM-H (manufactured by Tosoh Corporation)
Guard column: TSK guard column Super AW-H (manufactured by Tosoh Corporation)
Detector: RI (HLC-8320GPC built-in detector)
Standard sample: polystyrene
Sample injection amount: 30 μL of 0.06% DMF solution
Flow rate: 0.5mL/min
Eluent: DMF/100mM LiBr/60mM $H_3PO_4$

Regarding the resin (A), the molecular weight between crosslinking points is preferably 450 or more and 4,500 or less, more preferably 1,000 or more and 4,250 or less, and even more preferably 1,500 or more and 4,000 or less. When the molecular weight between crosslinking points is 450 or more, the effect of suppressing defects such as film cracking and film scattering is enhanced. When the molecular weight between crosslinking points is 4500 or less, the increase in adhesion of the film is suppressed, so that a blocking phenomenon which makes it difficult to peel off when surface treatment films are stacked is less likely to occur. The molecular weight between crosslinking points can be determined by the following formula.

$$E' = 3\rho RT / Mc$$

in which, E' is the minimum value of the tensile storage modulus (Pa), $\rho$ is the sample density (g/m$^3$), R is the gas constant (J/(K· mol)), T is the temperature at which the tensile storage modulus is the minimum value (K), and Mc is the molecular weight between crosslinking points (g/mol). The minimum value of the tensile storage modulus refers to the minimum value that can be read from the graph of temperature change in storage modulus, which is determined by measuring the temperature dispersion of a film-like test piece in tensile mode using the dynamic viscoelasticity measurement described above.

The resin (A) is preferably an anionic resin with an acid value of 5 mgKOH/g or more and 100 mgKOH/g or less, more preferably an anionic resin with an acid value of 15 mgKOH/g or more and 95 mgKOH/g or less, and even more preferably an anionic resin with an acid value of 25 mgKOH/g or more and 90 mgKOH/g or less.

The acid value of resin (A) is measured by the potentiometric titration method specified in JIS-K-0070-1992.

The resin (A) preferably has a carbonyl group (-C(=O)-) in addition to the anionic functional group. More preferably, the carbonyl group has at least one bond selected from a urethane bond, an ester bond, and an amide bond. The carbonyl group requires a nonionic functional group in addition to a functional group that forms an ion, such as a carboxy group derived from an acid value. Such nonionic functional group can be detected by IR and appears at 1740 to 1600 cm$^{-1}$. Functional groups that appear outside this range are considered to be ionic functional groups. By having a nonionic functional group, the adhesion with aluminum and the film-forming properties of the film itself are improved.

According to one embodiment of the present invention, the lower limit of the concentration of the resin (A) in the total solid content of the surface treatment composition (X) and the surface treatment film is preferably 25% by mass or more, more preferably 30% by mass or more, and even more preferably 40% by mass or more. According to one embodiment of the present invention, the upper limit of the concentration of the resin (A) in the total solid content of the surface treatment composition (X) and the surface treatment film is preferably 99% by mass or less, more preferably 90% by mass or less, and even more preferably 85% by mass or less.

The lower limit of the minimum film-forming temperature of the surface treatment composition (X) is preferably 10 °C or higher, more preferably 20 °C or higher, and even more preferably 30 °C or higher. The upper limit of the minimum film-forming temperature of the surface treatment composition (X) is preferably 70 °C or lower, more preferably 60 °C or lower, and even more preferably 50 °C or lower. The minimum film-forming temperature is measured by the method shown in JIS-K-6828-2:2003. Specifically, the surface treatment composition (X) is applied in a thickness of 0.1 mm using an applicator on a film-forming temperature tester, and the minimum film-forming temperature can be determined by reading the lowest temperature at which a uniform dry film is formed.

According to one embodiment of the present invention, the surface treatment composition (X) and surface treatment film may comprise an inorganic compound (B). The inorganic compound (B) is not particularly limited, and examples thereof include oxides such as silica, titanium oxide, zirconium oxide; sulfates such as titanium sulfate and zirconium sulfate; carbonates such as zirconium carbonate; nitrates such as zirconium oxynitrate; metal halides such as silicates, titanates, zirconates, phosphates, metal chlorides (for example, titanium chloride, silicon chloride, zirconium chloride); metal fluorides such as silicon fluoride, titanium fluoride, zirconium fluoride; alkali metal salts such as lithium bromide; alkaline earth metal salts such as magnesium nitrate; and hydroxides such as aluminum hydroxide; and the like. Among these, the inorganic compound (B) preferably contains at least one element selected from Si, Ti, and Zr. As the inorganic compound (B), one type may be used alone, or two or more types may be used in combination. Here, the inorganic compound (B) may be particulate or porous, and is not particularly limited. As the inorganic compound (B), usually those having an average particle size in the range of 1 nm or more and 100 nm or less, preferably 5 nm or more and 80 nm or less, and more preferably 15 nm or more and 70 nm or less, are used. The average particle size of the inorganic compound (B) refers to the volume-based median diameter measured by a laser diffraction / scattering type particle size distribution measuring device. In addition, the content of the inorganic compound (B) in the surface treatment composition (X) is usually selected within the range of 3% by mass or more and 30% by mass or less. When this content is 3% by mass or more, it becomes easier to form a film with a desired thickness, and the drying time can be shortened. Further, when the content is 30% by mass or less, the stability of the coating liquid tends to improve. Considering film forming properties, drying properties, stability of coating liquid and the like, the content of the inorganic compound particles is preferably in the range of 5% by mass or more and 25% by mass or less, particularly preferably in the range of 5% by mass or more and 15% by mass or less. Accordingly, for example, when silica is used as the inorganic compound (B), the silica may be colloidal, gas phase silica, or porous silica, and is not particularly limited. When colloidal silica is used, usually the average particle diameter is in the range of 1 nm or more and 100 nm or less, preferably 5 nm or more and 80 nm or less, and more preferably 15 nm or more and 70 nm or less. The average particle size of colloidal silica refers to the volume-based median diameter measured by a laser diffraction / scattering type particle size distribution measuring device. Further, the content of colloidal silica particles in the surface treatment composition (X) is usually selected within the range of 3% by mass or more and 30% by mass or less. When this content is 3% by mass or more, it becomes easier to form a film with a desired thickness, and the drying time can be shortened. Further, when the content is 30% by mass or less, the stability of the coating liquid tends to improve. Considering film forming properties, drying properties, stability of coating liquid and the like, the preferred content of the colloidal silica particles is in the range of 5% by mass or more and 25% by mass or less, particularly preferably in the range of 5% by mass or more and 15% by mass or less. As the colloidal silica particles, those commercially available as colloidal sol of silica can be used.

Regarding the surface treatment composition (X) and the surface treatment film, the mass ratio (inorganic compound (B) / resin (A)) of the inorganic compound (B) to the resin (A) is preferably 0.05 or more and 1.0 or less, more preferably 0.1 or more and 0.9 or less, and even more preferably 0.2 or more and 0.8 or less. When the mass ratio is 0.05 or more, crosslinking is promoted and corrosion resistance tends to improve, and when the mass ratio is 1.0 or less, film peeling and dissolution in water are less likely to occur.

According to one embodiment of the present invention, the surface treatment composition (X) and the surface treatment film may comprise an organic compound (C) different from the resin (A). The organic compound (C) is not particularly limited, and examples thereof include urethane resin, polyvinyl alcohol resin, polyamide resin, epoxy resin, acrylic resin, amine resin, phenol resin, polyvinylpyrrolidone resin, polycarbodiimide resin, and the like. In addition, the organic compound (C) may be a monopolymer (including modified products in which the side chain of the monopolymer is modified with another compounds) of these resins, or may be a copolymer obtained by polymerizing a combination of two or more types of monomers for obtaining these resins or modified products thereof. Among these, it is preferable to use a resin having at least one functional group selected from an epoxy group, an amino group, an oxazoline group, and a carbodiimide group. As the organic compound (C), one type may be used alone, or two or more types may be used in combination. In the surface treatment composition (X) and the surface treatment film containing the organic compound (C), the mass ratio (organic compound (C) / resin (A)) of the organic compound (C) to the resin (A) is preferably 0.05 or more and 1.0 or less, more preferably 0.1 or more and 0.9 or less, and even more preferably 0.2 or more and 0.8 or less.

The fact that the surface treatment composition (X) is aqueous means that it contains water. From the viewpoint of ease of handling, it is preferable to use deionized water as the water. The content of water is preferably 60 to 99% by mass, more preferably 70 to 95% by mass, with respect to the total amount of surface treatment composition (X).

The surface treatment composition (X) may contain a water-miscible solvent. The water-miscible solvent is not particularly limited as long as it does not undergo phase separation after mixing with water, and examples thereof include alcohols such as methanol and ethanol.

According to one embodiment of the present invention, the surface treatment film preferably has a lower limit of a water contact angle on the surface of 40° or more, more preferably 50° or more, and even more preferably 60° or more. When the water contact angle is 40° or more, water compatibility is not too strong and water is difficult to be trapped within the film, resulting in improved corrosion resistance. According to one embodiment of the present invention, the surface treatment film preferably has an upper limit of the water contact angle on the surface of 100° or less, more preferably 95° or less, and even more preferably 90° or less. When the water contact angle is 100° or less, it becomes easier to uniformly apply the surface treatment composition (X) to the surface of an aluminum material when forming the surface treatment film.

The water contact angle indicates the angle between the liquid level and the surface of the film at a location where the stationary water comes into contact with the surface treatment film. The water contact angle is calculated by irradiating a 1.0 μL water droplet on the surface treatment film with light from a direction parallel to the film surface, and photographing the droplet shadow 10 seconds after the droplet landed with a camera from the side opposite to the light incident direction, and performing image analysis using a θ/2 method.

The surface treatment film containing resin (A), or containing resin (A) and inorganic compound (B), or containing resin (A) and organic compound (C), or containing resin (A), inorganic compound (B), and organic compound (C), preferably has a lower limit of a ratio (E'25°C / E'120°C) of the tensile storage modulus measured at 25 °C (E'25°C) to the tensile storage modulus measured at 120 °C (E'120°C) of 10 or more, more preferably 50 or more, and even more preferably 100 or more. The upper limit of E'25°C / E'120°C is preferably 500 or less, more preferably 400 or less, and even more preferably 350 or less. The tensile storage modulus indicates the hardness of the film, and the tensile storage modulus in a region exceeding the glass transition temperature indicates a heat-resistant rubber region. By maintaining the ratio of tensile storage modulus within this temperature range, the surface treatment film can be used in a wide temperature range. When E'25°C / E'120°C is 10 or more, it is possible to prevent the film from becoming too hard, and it becomes easier to follow various processing. When E'25°C / E'120°C is 500 or less, the tensile storage modulus on the high temperature side does not become too low, and the durability of the film improves.

According to one embodiment of the present invention, the lower limit of the thickness of the surface treatment film is preferably 0.2 $\mu$m or more, more preferably 0.5 $\mu$m or more, and even more preferably 0.8 $\mu$m or more. preferable. The upper limit of the thickness of the surface treatment film according to one embodiment of the present invention is preferably 5 $\mu$m or less, more preferably 4 $\mu$m or less, and even more preferably 3 $\mu$m or less. The film thickness of the surface treatment film is measured using an eddy current film thickness meter based on ISO 2360: 2017.

<2. Surface treatment composition (Y)>

On or above the surface of the above-mentioned surface treatment film, another surface treatment composition (Y) may be applied for the purpose of imparting hydrophilicity or the like. The surface treatment composition (Y) has a resin (D). The resin (D) is not particularly limited, and examples thereof include urethane resin, polyvinyl alcohol resin, polyamide resin, epoxy resin, acrylic resin, amine resin, phenol resin, polyvinylpyrrolidone resin, polycarbodiimide resin, and the like. In addition, the resin (D) may be a monopolymer (including modified products in which the side chain of the monopolymer is modified with another compounds) of these resins, or may be a copolymer obtained by polymerizing a combination of two or more types of monomers for obtaining these resins or modified products thereof. Among these, it is preferable to use a resin having at least one functional group selected from an amino group, an amide group, a carboxy group, and a hydroxy group. The resin (D) may have only one type of these functional groups, or may have two or more types of these functional groups. Further, the surface treatment composition (Y) may contain only one type of the resin (D), or may contain two or more types of the resin (D). The surface treatment composition (Y) may appropriately contain deionized water, a water-miscible solvent, etc. in addition to the resin (D).

The lower limit of the surface tension of the surface treatment composition (Y) is preferably 20 mN/m or more, more preferably 25 mN/m or more, and even more preferably 30 mN/m or more. The upper limit of the surface tension of the surface treatment composition (Y) is preferably 50 mN/m or less, more preferably 45 mN/m or less, and even more preferably 40 mN/m or less. The surface tension indicates the force that acts on the surface treatment composition (Y) to reduce its surface size at the interface between the surface treatment composition (Y) and the gas. Surface tension is determined by the plate method (Wilhelmy method). Specifically, it is determined by measuring the pulling force exerted on a platinum plate from the surface treatment composition when the plate is immersed in the surface treatment composition.

<3. Matters common to surface treatment compositions (X) and (Y)>

Additives such as particles such as fillers, surfactants, antifoaming agents, thickeners, and water-soluble organic solvents can be appropriately added to the surface treatment compositions (X) and (Y). The ionic nature of the surfactant, such as cationic, nonionic, anionic, or the like, is not particularly limited. Among these, it is preferable to use a surfactant having a hydroxy group. Surfactants lower surface tension and improve unevenness. Antifoaming agents suppress foaming. Thickeners increase viscosity. The organic solvent is not particularly limited as long as it is water-soluble. Water-soluble organic solvents such as alcohols, ketones, organic acids, amines, furans, ethers, and glycols can be used regardless of the alkyl series. One or more types of these additives can be used depending on the purpose.

Incidentally, from the viewpoint of achieving the desired effect contemplated by the present invention, the total mass of these various additives is, for example, preferably 15% by mass or less, more preferably 10% by mass or less, and even more preferably 0.5 to 5% by mass, with respect to the total mass of the resin (A), the inorganic compound (B), and the organic compound (C) in the surface treatment composition (X), or with respect to the mass of the resin (D) in the surface treatment composition (Y).

The pH of the surface treatment compositions (X) and (Y) is not particularly limited as long as the effects of the present invention can be achieved, but in terms of the effects of the present invention being more excellent, preferably the pH is in the range of 3 or more and 11 or less, more preferably the pH is in the range of 3.5 or more and 10.5 or less, and even more preferably the pH is in the range of 4 or more and 10 or less.

There is no particular restriction on the solid content concentration of the surface treatment compositions (X) and (Y) as long as the effects of the present invention can be achieved, but in terms of the effects of the present invention being more excellent, it is preferably in the range of 1% by mass or more and 40% by mass or less, more preferably in the range of 3% by mass or more and 35% by mass or less, and even more preferably in the range of 5% by mass or more and 30% by mass. The solid content concentration of the surface treatment compositions (X) and (Y) is determined by measuring the heating residue according to JIS-K-5601-1-2:2008.

The surface treatment compositions (X) and (Y) can be prepared, for example, by mixing the above-mentioned components in a desired ratio, adding a required amount of water to the mixture, and stirring.

<4. Method for producing surface treated aluminum material>

According to one embodiment of the present invention, a method for producing a surface treated aluminum material using the above-mentioned surface treatment composition (X) is provided. There are no particular restrictions on the method for producing the surface treated aluminum material, but usually, the method includes a step of bringing the above-mentioned surface treatment composition (X) into contact on or above the surface of an aluminum material and heating and drying it to form a film on the surface of the aluminum material. In the following, first, the aluminum material that is the object to be processed will be explained, and then the process procedure will be explained in detail.

The use of the aluminum material to which the surface treatment composition (X) is applied is not particularly limited, but it may be used for aluminum strength members, heat exchangers, building materials, automobile parts, battery materials, and the like. In the present invention, the aluminum material is pure aluminum or aluminum alloy, and examples of aluminum alloys include Al-Cu type, Al-Si type, Al-Mg type, Al-Si-Cu type, Al-Si-Mg type, Al-Co-Cu type, Al-Mn-Mg type, Al-Mn-Fe type, and Al-Mn-Zn-Fe-Mg type, and the like.

Prior to treatment with the surface treatment composition (X) on the aluminum material, although not indispensable, in order to remove oil and dirt adhering to the aluminum material to be treated, usually a suitable combination of degreasing treatment, hot water washing, pickling, solvent washing and the like is carried out. The method for the above degreasing treatment is not particularly limited and can be appropriately selected from methods conventionally used for degreasing aluminum materials. As the degreasing method, for example, a solvent degreasing method (solvent washing method, solvent vapor cleaning method), an alkali degreasing method, an electrolytic alkali degreasing method, an emulsion degreasing method, or the like can be used. In this way, the surface treatment composition (X) can be applied to the degreased aluminum material.

In addition, although usually unnecessary, a ground treatment can be performed before the treatment with the surface treatment composition (X) for the purpose of further improving the corrosion resistance of the aluminum material and the adhesion between the film and the metal material. The method of ground treatment is not particularly limited, but examples include a chemical conversion treatment in which one or more metals such as Fe, Co, Ni, Cu, Zn, Mn, Zr, Ti, or V are deposited, and a surface conditioning treatment as a pretreatment to uniformly finish the film deposited by chemical conversion treatment, or the like. Examples of the chemical conversion treatment agent include a zirconium chemical conversion treatment agent, a phosphate chemical conversion treatment agent, a titanium chemical conversion treatment agent, a chromate chemical conversion treatment agent, and the like, but are not limited thereto. In any of the above treatments, it is preferable to wash with water so that no treatment liquid remains on the surface of the aluminum material. As the application method, a dipping method in which the aluminum material is immersed in a treatment liquid is preferred, and the treatment temperature is usually in the range of 20 °C or more and 70 °C or less, preferably 30 °C or more and 60 °C or less. The treatment time depends on the treatment temperature and cannot be absolutely determined, but usually about 5 to 180 seconds is sufficient.

The method of bringing the surface treatment composition (X) into contact with the aluminum material is not particularly limited, and examples include coating methods such as a roll coater method, a dipping method, a spray method, a bar coat method, a curtain flow method, and a spin coat method. In addition, the temperature of the treatment liquid during contact is not particularly limited and may be room temperature, but is preferably 10 to 60 °C, more preferably 15 to 40 °C. The contact time is usually in the range of 5 seconds or more and 600 seconds or less, and is not particularly limited, but a short time is sufficient for the contact time between the surface treatment composition (X) and the aluminum material. The contact time may be 5 seconds or more and 300 seconds or less, may be 5 seconds or more and 200 seconds or less, and may be 5 seconds or more and 100 seconds or less. Further, after bringing the aluminum material into contact with the surface treatment liquid material (X), the aluminum material is subjected to a heat drying treatment. There are no particular limitations on the heating and drying method, and examples include a dryer, a hot wind oven, a high frequency induction heating oven, an infrared oven, and the like. There is no particular restriction on the heat drying temperature, but the temperature of the metal material reached during drying is preferably 50 °C or more and 250 °C or less, more preferably 70 °C or more and 220 °C or less. After the surface treatment composition (X) is brought into contact with the aluminum material, it can be dried and formed into a film as it is, so a washing step is unnecessary and no waste water is generated. Therefore, according to one embodiment of the present invention, an environmentally friendly method for producing a surface treated aluminum material can be provided.

By performing the above treatment, a surface treated aluminum material having a surface-treatment film can be obtained. The preferred film thickness is as described above. The surface treatment film may be composed of a single layer, or may be composed of multiple layers by performing the above treatment multiple times.

On or above the surface of the above surface treatment film, another film derived from the surface treatment composition (Y) may be formed by contacting with the surface treatment composition (Y), and then drying. Although the film thickness of this another film is not limited, it may be 0.4 μm or more and 5 μm or less, and preferably 0.5 μm or more and 3 μm or less. Drying can be performed, for example, at a temperature of 100 °C or more and 250 °C or less, preferably 120 °C or more and 220 °C or less.

EXAMPLES

The present invention will be explained in more detail using Examples and Comparative Examples. It should be noted that the present invention is not limited to the following examples.

(1) Preparation of surface treatment test plate

(1-1) Test plate

The following aluminum materials (i) to (iii) were prepared as test plates.

(i) 1000 series aluminum (A1050): plate thickness 0.1mm
(ii) 3000 series aluminum alloy (A3102): plate thickness 0.1mm
(iii) 8000 series aluminum alloy (A8011): plate thickness 0.1mm

(1-2) Pre-cleaning

The test plate was previously degreased using an alkaline degreasing agent to remove oil and dirt from the surface (alkaline degreasing agent Fine Cleaner 4424 produced by Nihon Parkerizing Co., Ltd. Degreasing conditions: degreasing agent concentration 20.0 g/L, treatment liquid temperature 45 °C, degreasing time 120 seconds, spray treatment). Next, after washing with tap water and confirming that 100% of the surface of the test plate was able to get wet with water, pure water (deionized water) was poured over the test plate, and moisture was dried in an oven at 100 °C.

(1-3) Resin (A)

(Synthesis Example 1) Synthesis of silicone resin (A1)

600.0 parts by mass of water was added to a reaction vessel equipped with a stirrer, a reflux condenser, a thermometer, and a nitrogen gas introduction tube. Then, a solution mixed with 150.0 parts by mass of toluene, 600.0 parts by mass of trichlorophenylsilane, 11.6 parts by mass of dichloromethylsilane, 14.1 parts by mass of chlorovinylmethylsilane, 195.0 parts by mass of polysiloxane ($ClMe_2SiO(Me_2SiO)_{33}SiMe_2Cl$) was dropped into water to cause cohydrolysis. To this mixed solution, 1.9 parts by mass of polyoxyethylene lauryl ether (HLB value 13.6) was added and stirred, and toluene was removed by vacuum distillation. A silicone resin having an average molecular weight of 11,000, a nonvolatile content of 41.0% by mass, a glass transition temperature of 60 °C, an acid value of 0 mgKOH/g, and a tensile storage modulus of 210 MPa at 25 °C was thus obtained. In addition, the molecular weight between crosslinking points could not be measured because the film was broken before the tensile storage modulus reached its minimum value.

(Synthesis Example 2) Synthesis of urethane resin (A2)

To a reaction vessel equipped with a stirrer, a reflux condenser, a thermometer and a nitrogen gas introduction tube, 7.3 parts by mass of polyester polyol (synthesis components: adipic acid and 1,6-hexanediol, molecular weight 1000), 21.8 parts by mass of bisphenol A-polyoxyethylene 2 mole adduct (Newpol BPE-20NK, produced by Sanyo Chemical Industries, Ltd.), 0.8 parts by mass of trimethylolpropane, 7.4 parts by mass of dimethylolpropionic acid, 46.0 parts by mass of dicyclohexylmethane diisocyanate, and 7.0 parts by mass of isocyanurate-modified hexamethylene diisocyanate (TLA100, produced by Asahi Kasei Corporation) were added together with 84.0 parts by mass of methyl ethyl ketone and sufficiently dissolved. After reacting this mixed solution at 75 °C for 4 hours, it was confirmed that 3% or less of isocyanate groups were contained, and the mixture was cooled to 45 °C and 5.7 parts by mass of triethylamine was added. Next, 360.0 parts by mass of water was added to emulsify, and to the obtained solution, a mixed solution of 5.2 parts by mass of diethylenetriamine and 6.6 parts by mass of water was added and reacted for 1 hour, and then methyl ethyl ketone was removed by vacuum distillation. A urethane resin having an average molecular weight of 400,000, a nonvolatile content of 25.0% by mass, a glass transition temperature of 80 °C, an acid value of 34 mgKOH/g, a tensile storage modulus at 25 °C of 2000 MPa, and a molecular weight between crosslinking points of 450 was thus obtained.

In addition, regarding the content of isocyanate groups, according to JIS K7301:1995, 2 g of the reaction solution was dissolved in dimethylformamide, 10 ml of n-dibutylamine-toluene solution was added, and then titrated with 0.5 mol/L hydrochloric acid solution using bromophenol blue as an indicator. Calculation is conducted using the following formula:

[Formula 1]

$$NCO(\%) = \frac{(A - B) \times f \times N \times 42.02}{S \times 1000} \times 100$$

(in which, A means the volume of hydrochloric acid solution required for titration with respect to the amount (mass) of isocyanate used when preparing a predetermined amount of reaction solution, B means the volume of hydrochloric acid solution required for titration with respect to the reaction solution, f is "1", N means the molar concentration of the hydrochloric acid standard solution, and S means the mass of the reaction solution, respectively.)

(Synthesis Example 3) Synthesis of urethane resin (A3)

To a reaction vessel equipped with a stirrer, a reflux condenser, a thermometer and a nitrogen gas introduction tube, 31.7 parts by mass of polyester polyol (synthesis components: adipic acid and 1,6-hexanediol, neopentyl glycol, molecular weight 10000), 5.3 parts by mass of bisphenol A-polyoxyethylene 2 mole adduct (Newpol BPE-20NK, produced by Sanyo Chemical Industries, Ltd.), 0.9 parts by mass of trimethylolpropane, 8.6 parts by mass of dimethylolpropionic acid, 46.1 parts by mass of dicyclohexylmethane diisocyanate, and 7.4 parts by mass isocyanurate-modified hexamethylene diisocyanate (TLA100, produced by Asahi Kasei Corporation) were added together with 70.0 parts by mass of methyl ethyl ketone and sufficiently dissolved. After reacting this mixed solution at 75 °C for 4 hours, it was confirmed that 3% or less of isocyanate groups were contained, and the mixture was cooled to 45 °C and 6.5 parts by mass of triethylamine was added. Next, 300.0 parts by mass of water was added to emulsify, and to the obtained solution, a mixed solution of 6.1 parts by mass of diethylenetriamine and 5.5 parts by mass of water was added and reacted for 1 hour, and then methyl ethyl ketone was removed by vacuum distillation. A urethane resin having a weight average molecular weight of 500,000, a nonvolatile content of 30.0% by mass, a glass transition temperature of 45 °C, an acid value of 36 mgKOH/g, a tensile storage modulus at 25 °C of 1500 MPa, and a molecular weight between crosslinking points of 5000 was thus obtained.

(Synthesis Example 4) Synthesis of urethane resin (A4)

To a reaction vessel equipped with a stirrer, a reflux condenser, a thermometer and a nitrogen gas introduction tube, 47.6 parts by mass of polyester polyol (synthesis components: isophthalic acid, adipic acid and 1,6-hexanediol, ethylene glycol, molecular weight 1700), 3.5 parts by mass of bisphenol A-polyoxyethylene 2 mole adduct (Newpol BPE-20NK, produced by Sanyo Chemical Industries, Ltd.), 1.4 parts by mass of trimethylolpropane, 12.9 parts by mass of dimethylolpropionic acid, 72.7 parts by mass of dicyclohexylmethane diisocyanate, and 11.1 parts by mass of isocyanurate-modified hexamethylene diisocyanate (TLA100, produced by Asahi Kasei Corporation) were added together with 105.0 parts by mass of methyl ethyl ketone and sufficiently dissolved. After reacting this mixed solution at 75 °C for 4 hours, it was confirmed that 3% or less of isocyanate groups were contained, and the mixture was cooled to 45 °C and 9.9 parts by mass of triethylamine was added. Next, 450.0 parts by mass of water was added to emulsify, and to the obtained solution, a mixed solution of 9.2 parts by mass of diethylenetriamine and 8.3 parts by mass of water was added and reacted for 1 hour, and then methyl ethyl ketone was removed by vacuum distillation. A urethane resin having a weight average molecular weight of 390,000, a nonvolatile content of 30.0% by mass, a glass transition temperature of 50 °C, an acid value of 36 mgKOH/g, a tensile storage modulus at 25 °C of 1100 MPa, and a molecular weight between crosslinking points of 4000 was thus obtained.

(Synthesis Example 5) Synthesis of acrylic resin (A5)

To a reaction vessel equipped with a stirrer, a reflux condenser, a thermometer and a nitrogen gas introduction tube, 1150.2 parts by mass of diethylene glycol dimethyl ether and 40.5 parts by mass of fumaric acid were charged, stirring was started, and the temperature was raised to 135 °C. Next, 1593.0 parts by mass of styrene, 364.5 parts by mass of methyl methacrylate, 156.6 parts by mass of n-butyl acrylate, 270.0 parts by mass of 2-hydroxyethyl methacrylate, 243.0 parts by mass of acrylic acid, and 105.0 parts by mass of t-butylperoxy-2-ethylhexanoate were continuously added dropwise over 3 hours, and the mixture was stirred at the same temperature for 2 hours. Next, 175.5 parts by mass of triethylamine and 3157.5 parts by mass of ion-exchanged water were added. An acrylic resin having a weight average molecular weight of 150,000, a nonvolatile content of 45.0% by mass, a glass transition temperature of 80 °C, an acid value of 85 mgKOH/g, a tensile storage modulus at 25 °C of 1800 MPa, and a molecular weight between crosslinking points of 2000 was thus obtained.

(Synthesis Example 6) Synthesis of epoxy resin (A6)

To a reaction vessel equipped with a stirrer, a reflux condenser, a thermometer and a nitrogen gas introduction tube, 187.5 parts by mass of butyl cellosolve, 315.0 parts by mass of bisphenol A type epoxy resin (Epotote YD-014, produced by Nippon Steel Chemical & Materials Co., Ltd.), 112.5 parts by mass of polyethylene glycol diglycidyl ether (Denacol EX-841, produced by Nagase ChemteX Corporation) and 9.8 parts by mass of glycidyl methacrylate were added and dissolved at 100 °C, then 55.1 parts by mass of dibutylamine was added and reacted at the same temperature for 5 hours. Next, a mixture of 24.0 parts by mass of acrylic acid, 15.0 parts by mass of styrene, 15.0 parts by mass of butyl acrylate, 60.0 parts by mass of butyl cellosolve, and 4.5 parts by mass of tert-butylperoxy-2-ethylhexanoate was added dropwise over 1 hour and the temperature was kept for 4 hours. After cooling to 80°C, 31.5 parts by mass of triethylamine and 750.0 parts by mass of water were added. An epoxy resin having a weight average molecular weight of 100,000, a nonvolatile content of 35.0% by mass, a glass transition temperature of 45 °C, an acid value of 34 mgKOH/g, and a tensile storage modulus at 25 °C of 300 MPa was thus obtained. In addition, the molecular weight between crosslinking points could not be measured because the film was broken before the tensile storage modulus reached its minimum value.

(Synthesis Example 7) Synthesis of urethane resin (A7) (Synthesis Example 28 of Patent Literature 4)

To a 2L separable flask equipped with a stirrer, 63.0 parts by mass of bisphenol A-polyoxyethylene 2 mole adduct (Newpol BPE-20T, produced by Sanyo Chemical Industries, Ltd.), 67.0 parts by mass of polyethylene glycol (PEG1000, produced by Sanyo Chemical Industries, Ltd.), 30.0 parts by mass of N-methyldiethanolamine (amino alcohol MDA, produced by Nippon Nyukazai Co., Ltd.), 30.0 parts by mass of diethylene glycol (diethylene glycol, produced by Nippon Shokubai Co., Ltd.), 218.0 parts by mass of dicyclohexylmethane 4,4'-diisocyanate (Desmodur W, produced by Bayer AG), and 13.0 parts by mass of trimethylolpropane (amino alcohol MDA, produced by Nippon Nyukazai Co., Ltd.) were added together with 400.0 parts by mass of methyl ethyl ketone and sufficiently dissolved. After reacting this mixed solution at 80 °C for about 5 hours, it was confirmed that 3% or less of isocyanate groups were contained, and 25.0 parts by mass of dimethyl sulfate was added. Next, 1000 parts by mass of deionized water was added to prepare a urethane resin. Methyl ethyl ketone was removed from the obtained urethane resin by vacuum distillation. A urethane resin having a weight average molecular weight of 510,000, a nonvolatile content of 25.0% by mass, a glass transition temperature of 100 °C, an acid value of 0 mgKOH/g, and a tensile storage modulus of 2300 MPa at 25 °C was thus obtained.

(Synthesis Example 8) Synthesis of urethane resin (A8)

To a reaction vessel equipped with a stirrer, a reflux condenser, a thermometer and a nitrogen gas introduction tube, 202.5 parts by mass of polyester polyol (synthesis components: isophthalic acid, adipic acid and 1,6-hexanediol, ethylene glycol, molecular weight 1700), 7.5 parts by mass of trimethylolpropane, 33.0 parts by mass of N-methyl-N,N-diethanolamine, 129.0 parts by mass of isophorone diisocyanate, and 180.0 parts by mass of methyl ethyl ketone were added and reacted at 70 °C for 4 hours. Next, 25.5 parts by mass of dimethyl sulfate was added, and the mixture was reacted at 50 °C for 60 minutes. After adding 922.5 parts by mass of water to the obtained reaction product and uniformly emulsifying it, methyl ethyl ketone was removed by vacuum distillation. A urethane resin having a weight average molecular weight of 410,000, a nonvolatile content of 30.0% by mass, a glass transition temperature of 0 °C, an acid value of 0 mgKOH/g, and a tensile storage modulus of 2 MPa at 25 °C was thus obtained. In addition, the molecular weight between crosslinking points could not be measured because the film was broken before the tensile storage modulus reached its minimum value.

(Tensile storage modulus, glass transition temperature (Tg), and molecular weight between crosslinking points of resin (A))

The tensile storage modulus, the glass transition temperature, and the molecular weight between crosslinking points of the resin (A) were measured by the following methods.
The tensile storage modulus was measured using a dynamic viscoelasticity measurement device manufactured by TA Instruments (product number: RSA-G2) according to the measurement method described above. Specifically, the resin (A) was cured into a film with a thickness of about 0.5 mm, and the obtained film was processed into a test piece with a width of 4.0 mm and a length of 50.0 mm. While applying tensile stress (50.0N), dynamic viscoelasticity was measured from -20 °C to 200 °C at a heating rate of 5.0 °C/min and a frequency of 10.0Hz, thereby the storage modulus and loss modulus at each temperature were determined. From the obtained results, the tensile storage modulus of resin (A) at 25 °C was determined. Further, the temperature at which the ratio (tan $\delta$) between the storage modulus and the loss modulus becomes maximum was determined as the glass transition temperature (Tg). In addition, when multiple glass transition temperatures were confirmed due to a copolymer resin or the like, the temperature on the lower temperature side was regarded as the glass transition temperature of the resin.

The molecular weight between crosslinking points was determined by the following formula as described above.

$$E' = 3\rho RT / Mc$$

in which, E' is the tensile storage modulus, $\rho$ is the sample density, R is the gas constant, T is the temperature, and Mc is the molecular weight between crosslinking points.

(Weight average molecular weight of resin (A))

The weight average molecular weight of the resin (A) was measured by the GPC method described above using a high-speed GPC device (HLC-8320GPC: manufactured by Tosoh Corporation).

(Acid value of resin (A))

The acid value of resin (A) was measured according to the potentiometric titration method specified in JIS-K-0070: 1992.

(1-4) Inorganic compound (B)

The following B1 to B3 were used as inorganic compounds.

B1: Silica (Snowtex N, produced by Nissan Chemical Corporation)
B2: No. 3 silicate (J Sodium Silicate No. 3, produced by Nippon Chemical Industrial Co.,Ltd.)
B3: Basic zirconium carbonate (produced by Nippon Light Metal Co., Ltd.)

(1-5) Organic compound (C)

The following C1 to C3 were used as organic compounds.

C1: Epoxy resin (Denacol EX-612, produced by Nagase ChemteX Corporation)
C2: Acrylic resin (Epocross WS-300, produced by Nippon Shokubai Co., Ltd.)
C3: Amine resin (Cymel 303LF, produced by Allnex Japan Inc.)

(1-6) Resin (D)

The following resins D1 to D2 were used.

D1: Polyvinyl alcohol (Kuraray Poval PVA-103, produced by Kuraray Co., Ltd.)
D2: Sodium polyacrylate (Aqualic DL-40S, produced by Nippon Shokubai Co., Ltd.)

(1-7) Preparation of surface treatment composition X

According to the number of treatment agent shown in Table 1 below, the resin (A), the inorganic compound (B), and the organic compound (C) were added to a vessel in this order so that the mass ratio of the solid content was as shown in Table 1. Further, a surfactant was added in an amount of 1% by mass with respect to the total mass of the resin (A), the inorganic compound (B), and the organic compound (C) in the surface treatment composition (X). By adding deionized water and stirring so that the total solids concentration of the ingredients was 10% by mass, surface treatment compositions X (treatment agents 1 to 26) were prepared. Table 1 shows the pH (room temperature) of surface treatment composition X. Table 1 also shows the concentration of resin (A) in the total solid content of surface treatment composition X.

(Minimum film-forming temperature)

The minimum film forming temperature of surface treatment composition X was determined according to the method shown in JIS-K-6828-2: 2003. On the top of a film-forming temperature tester (product number: IMC-153A) manufactured by Imoto Machinery Co., Ltd., the surface treatment composition X was applied in a thickness of 0.1 mm using an applicator, and it was determined by reading the lowest temperature that would form a uniform dry film. The results are shown in Table 1.

(Ratio (E'25°C / E'120°C) of tensile storage modulus measured at 25 °C (E'25°C) to tensile storage modulus measured at 120 °C (E'120°C) of surface treatment film)

E'25°C / E'120°C was measured using a dynamic viscoelasticity measurement device (product number: RSA-G2) manufactured by TA Instruments Japan Inc. according to the measurement method described above. Specifically, the surface treatment composition (X) was cured into a film with a thickness of about 0.5 mm, and the obtained film was processed into a test piece with a width of 4.0 mm and a length of 50.0 mm. While applying tensile stress (50.0N), dynamic viscoelasticity was measured at a heating rate of 5.0 °C/min and a frequency of 10.0Hz, thereby the tensile storage modulus at each temperature was determined. From the obtained results, E'25°C / E'120°C of the surface treatment film was determined. The results are shown in Table 1. It should be noted that if the film was broken before reaching 120 °C and E'25°C / E'120°C could not be measured, it was indicated as "-" in Table 1.

(1-8) Preparation of surface treatment composition Y

Resin (D) was added to the container according to the number of the treatment agent shown in Table 1 below, and a surfactant was added in an amount of 1% by mass with respect to the resin (D). Deionized water was added and stirred so that the total solid concentration of the contained components was 10% by mass to prepare surface treatment compositions Y (treatment agents 27 and 28). The pH (room temperature) of surface treatment composition Y is shown in Table 1.

(Surface tension)

Regarding surface treatment composition Y, the surface tension was measured by the plate method (Wilhelmy method) described above. Specifically, using a static surface tension meter (product number: DY-500) manufactured by Kyowa Interface Science Co., Ltd., a clean platinum plate was immersed in the surface treatment composition Y, and it was determined by measuring the tensile force of the surface treatment composition Y against the platinum plate at that time. The results are shown in Table 1.

Table 1

| | Surface treatment composition X | | | | | | | | | | | | Surface treatment composition Y | | |
| | Resin (A) | | | | Concentration % by mass in total solids | inorganic compound (B) | | Organic compound (C) | | pH | E'25°C / E'120°C | Minimum film-forming temperature °C | Resin (D) | Surface tension mN/m | pH |
| | Type | Tg/°C | Tensile storage modulus at 25 °C / MPa | Molecular weight between crosslinking points | | Type | Formulation mass ratio B/A | Type | Formulation mass ratio C/A | | | | | | |
|---|---|---|---|---|---|---|---|---|---|---|---|---|---|---|---|
| Treatment agent 1 | A1 | 60 | 210 | - | 99 | - | - | - | - | 72 | - | 40 | - | - | - |
| Treatment agent 2 | A1 | 60 | 210 | - | 94 | B1 | 0.05 | - | - | 7.5 | - | 40 | - | - | - |
| Treatment agent 3 | A1 | 60 | 210 | - | 79 | B1 | 0.25 | - | - | 8.1 | - | 40 | - | - | - |
| Treatment agent 4 | A1 | 60 | 210 | - | 66 | B1 | 0.50 | - | - | 8.5 | - | 40 | - | - | - |
| Treatment agent 5 | A1 | 60 | 210 | - | 57 | B1 | 0.75 | - | - | 9.2 | - | 40 | - | - | - |
| Treatment agent 6 | A1 | 60 | 210 | - | 50 | B1 | 1.00 | - | - | 9.3 | - | 40 | - | - | - |
| Treatment agent 7 | A2 | 80 | 2000 | 450 | 99 | - | - | - | - | 8.8 | 120 | 25 | - | - | - |
| Treatment agent 8 | A3 | 45 | 1500 | 5000 | 99 | - | - | - | - | 9.1 | 500 | 15 | - | - | - |
| Treatment agent 9 | A4 | 50 | 1100 | 4000 | 94 | B2 | 0.05 | - | - | 10.5 | 430 | 20 | - | - | - |
| Treatment agent 10 | A4 | 50 | 1100 | 4000 | 86 | B2 | 0.15 | - | - | 10.9 | 23 | 50 | - | - | - |
| Treatment agent 11 | A4 | 50 | 1100 | 4000 | 94 | B3 | 0.05 | - | - | 9.0 | 250 | 20 | - | - | - |

| | Surface treatment composition X | | | | | | | | | | | | Surface treatment composition Y | | |
| | Resin (A) | | | | | inorganic compound (B) | | Organic compound (C) | | pH | E'25°C / E'120°C | Minimum film-forming temperature °C | Resin (D) | Surface tension mN/m | pH |
| | Type | Tg/°C | Tensile storage modulus at 25 °C / MPa | Molecular weight between crosslinking points | Concentration % by mass in total solids | Type | Fomulation mass ratio B/A | Type | Fomulation mass ratio C/A | | | | | | |
|---|---|---|---|---|---|---|---|---|---|---|---|---|---|---|---|
| Treatment agent 12 | A5 | 80 | 1800 | 2000 | 94 | B3 | 0.05 | - | - | 9.0 | 370 | 30 | - | - | - |
| Treatment agent 13 | A5 | 80 | 1800 | 2000 | 66 | B3 | 0.50 | - | - | 9.5 | 120 | 40 | - | - | - |
| Treatment agent 14 | A5 | 80 | 1800 | 2000 | 76 | B3 | 0.05 | C1 | 0.25 | 8.8 | 130 | 30 | - | - | - |
| Treatment agent 15 | A5 | 80 | 1800 | 2000 | 76 | B3 | 0.05 | C2 | 0.25 | 9.2 | 150 | 35 | - | - | - |
| Treatment agent 16 | A5 | 80 | 1800 | 2000 | 90 | B3 | 0.05 | C3 | 0.05 | 9.0 | 200 | 35 | - | - | |
| Treatment agent 17 | A5 | 80 | 1800 | 2000 | 76 | B3 | 0.05 | C3 | 0.25 | 9.1 | 180 | 35 | - | - | - |
| Treatment agent 18 | A5 | 80 | 1800 | 2000 | 48 | B3 | 0.05 | C3 | 1.00 | 8.9 | 140 | 45 | - | - | - |
| Treatment agent 19 | A6 | 45 | 300 | - | 94 | B1 | 0.05 | - | - | 8.5 | - | 15 | - | - | - |
| Treatment agent 20 | A6 | 45 | 300 | - | 79 | B2 | 0.25 | - | - | 11 | - | 40 | - | - | - |
| Treatment agent 21 | A6 | 45 | 300 | - | 94 | B3 | 0.05 | - | - | 9.3 | - | 40 | - | - | - |
| Treatment agent 22 | A4 | 50 | 1100 | 4000 | 99 | - | - | - | - | 8.5 | 470 | 10 | - | - | - |

EP 4 491 690 A1

(continued)

| | Surface treatment composition X | | | | | | | | | | | | | Surface treatment composition Y | | |
|---|---|---|---|---|---|---|---|---|---|---|---|---|---|---|---|---|
| | Resin (A) | | | | | inorganic compound (B) | | Organic compound (C) | | pH | E'25°C / E'120°C | Minimum film-forming temperature °C | | Resin (D) | Surface tension mN/m | pH |
| | Type | Tg/°C | Tensile storage modulus at 25 °C / MPa | Molecular weight between crosslinking points | Concentration % by mass in total solids | Type | Fomulation mass ratio B/A | Type | Fomulation mass ratio C/A | | | | | | | |
| Treatment agent 23 | A5 | 80 | 1800 | 2000 | 99 | - | - | - | - | 8.2 | 3600 | 25 | | - | - | - |
| Treatment agent 24 | A6 | 45 | 300 | - | 99 | - | - | - | - | 9.2 | - | 15 | | - | - | - |
| Treatment agent 25 | A7 | 100 | 2300 | 500 | 99 | - | - | - | - | 4.0 | 70 | 60 | | - | - | - |
| Treatment agent 26 | A8 | 0 | 2 | - | 99 | - | - | - | - | 4.5 | - | 5 | | - | - | - |
| Treatment agent 27 | - | - | - | - | - | - | - | - | - | - | - | - | | D1 | 30 | 7.0 |
| Treatment agent 28 | - | - | - | - | - | - | - | - | - | - | - | - | | D2 | 35 | 8.0 |

(1-9) Preparation of surface treatment film

<Test plate with single layer film (Examples 1 to 29, Comparative Examples 1 and 2)>

Each of the test plates described above was immersed in the treatment agents shown in Table 2 (liquid temperature: 20 °C) for 15 seconds, and then hung at room temperature for a predetermined period of time. The film thickness was adjusted by changing this predetermined time depending on the test number. Thereafter, it was hung in a blow dryer adjusted to 170 °C and heated and dried for 6 minutes to form a surface treatment film. In this way, surface treated test plates according to Examples 1 to 29 and Comparative Examples 1 and 2 were prepared. It should be noted that no surface treatment was applied to the test plates of Comparative Examples 3 to 5.

<Test plate with multilayer film (Examples 30 to 36, Comparative Examples 6 and 7)>

(Lower layer)

Each of the test plates described above was immersed in the treatment agents shown in Table 3 (liquid temperature 20 °C) for 15 seconds, and then hung in a blow dryer adjusted to 170 °C and heated and dried for 6 minutes to form a surface treatment film as a lower layer.

(Water contact angle)

The water contact angle of the lower layer surface treatment film was determined by the following procedure. Using a contact angle meter manufactured by Kyowa Interface Science Co., Ltd. (product number: DM-501), a 1.0 μL water droplet was dropped onto the lower layer surface treatment film. Then, light was irradiated from a direction parallel to the film surface, and the droplet shadow was photographed 10 seconds after the droplet had landed from the opposite side to the direction of light incidence, and the water contact angle was determined by image analysis using the θ/2 method. The results are shown in Table 3.

(Upper layer)

Next, each of the test plates with the lower layer surface treatment film was immersed in the treatment agents shown in Table 3 for 15 seconds. Then, the sample was hung in a blow dryer adjusted to 170 °C and heated and dried for 6 minutes to form an upper layer surface treatment film. In this way, surface treated test plates according to Examples 30 to 36 were prepared. Further, in Comparative Examples 6 and 7, only the upper layer surface treatment film was formed by the above procedure without applying a lower layer.

(2) Properties evaluation

The surface-treated test plates or the test plates without surface treatment prepared as described above were used as the evaluation samples for the following evaluation.

(2-1) Film thickness evaluation

The film thickness of each surface treated film obtained by the above procedure was determined by the following method. The film thickness was measured by an eddy current measurement method (based on ISO 2360: 2017) using a film thickness meter (product number: LZ-200J) manufactured by Kett Electric Laboratory Co. Ltd. The results are shown in Tables 2 and 3.

(2-2) Corrosion resistance evaluation

<Neutral salt spray test: NSS>

Based on the salt spray testing method (JIS-Z-2371: 2015), after spraying neutral salt water for 240 hours, the appearance of the evaluation sample was visually evaluated. The area ratio (%) of white rust generated on the surface of the evaluation sample was calculated, and the corrosion resistance (NSS) was evaluated according to the following evaluation criteria. It should be noted that an evaluation result of B or higher was considered to be a pass.

<Evaluation criteria>

A: Area ratio is less than 10%
B: Area ratio is 10% or more and less than 20%
C: Area ratio is 20% or more

<CASS test>

Based on the CASS test (JIS-Z-2371: 2015), after spraying a solution of salt water containing copper (II) chloride adjusted to pH 3.0 with acetic acid for 50 hours, the evaluation sample was immersed in a 2% chromic acid aqueous solution at 95 °C for 10 minutes to remove the white rust. The size and number of holes were evaluated using the rating number (RN) method based on JIS-Z-2371: 2015. It should be noted that an evaluation result of B or higher was considered to be a pass.

<Evaluation criteria>

S: 0 holes
A: RN 9 or higher
B: less than RN 9, RN 8 or higher
C: less than RN 8

(2-3) Acid resistance evaluation

The evaluation sample was immersed in a 0.05% by mass sulfuric acid aqueous solution for 48 hours. Thereafter, the evaluation sample was taken out, washed with tap water, dried, and visually evaluated for appearance. Acid resistance was evaluated according to the following evaluation criteria. It should be noted that an evaluation result of B or higher was considered to be a pass.

<Evaluation criteria>

A: No change in appearance.
B: Less than 20% discolored area
C: 20% or more discolored area

(2-4) Alkali resistance evaluation

The evaluation sample was immersed in a 0.05% by mass aqueous sodium hydroxide solution for 48 hours. Thereafter, the evaluation sample was taken out, washed with tap water, dried, and visually evaluated for appearance. Alkali resistance was evaluated according to the following evaluation criteria. It should be noted that an evaluation result of B or higher was considered to be a pass.

<Evaluation criteria>

A: No change in appearance.
B: Less than 20% discolored area
C: 20% or more discolored area

(2-5) Adhesion evaluation

A gauze moistened with water was rubbed on the surface of the evaluation sample in a reciprocating manner over a 3.5 cm range while being pressed under a load of 4.4 x 10$^4$ N/m$^2$. The number of back-and-forth times until when the surface treatment film was peeled off was measured, and the adhesion (before immersion in water) was evaluated according to the following evaluation criteria. Further, after immersing the evaluation sample in water for 96 hours, the surface was dried, and a gauze moistened with water was rubbed in a reciprocating manner over a 3.5 cm range while being pressed under a load of 4.4 x 10$^4$ N/m$^2$. The number of back-and-forth times until when the surface treatment film was peeled off was measured, and the adhesion (after immersion in water) was evaluated according to the following evaluation criteria. It should be noted that an evaluation result of A or higher was considered to be a pass.

<Evaluation criteria>

A: The number of back-and-forth times is 20 or more.
B: The number of back-and-forth times is 10 or more and less than 20.
C: The number of back-and-forth times is less than 10.

Table 2

| Test No. | Test plate | Treatment agent | Film thickness μm | Water contact angle ° | Evaluation item | | | | | | |
|---|---|---|---|---|---|---|---|---|---|---|---|
| | | | | | NSS | CASS | Acid resistance | Alkali resistance | Adhesion (before immersion in water) | Adhesion (after immersion in water) |
| Example 1 | A1050 | Treatment agent 1 | 1 | 95 | A | A | B | B | A | A |
| Example 2 | A1050 | Treatment agent 2 | 1 | 92 | A | A | A | A | A | A |
| Example 3 | A1050 | Treatment agent 3 | 1 | 93 | A | A | A | A | A | A |
| Example 4 | A1050 | Treatment agent 4 | 1 | 90 | A | A | B | A | A | A |
| Example 5 | A1050 | Treatment agent 5 | 1 | 91 | A | A | A | A | A | A |
| Example 6 | A1050 | Treatment agent 6 | 1 | 89 | A | A | A | A | A | A |
| Example 7 | A1050 | Treatment agent 7 | 1 | 81 | A | A | B | B | A | A |
| Example 8 | A1050 | Treatment agent 8 | 1 | 82 | A | B | B | B | A | A |
| Example 9 | A1050 | Treatment agent 9 | 1 | 70 | A | A | A | A | A | A |
| Example 10 | A1050 | Treatment agent 10 | 1 | 68 | A | A | A | A | A | A |
| Example 11 | A1050 | Treatment agent 11 | 1 | 73 | A | A | A | A | A | A |
| Example 12 | A1050 | Treatment agent 12 | 1 | 80 | A | A | A | B | A | A |
| Example 13 | A1050 | Treatment agent 13 | 1 | 82 | A | A | A | B | A | A |
| Example 14 | A1050 | Treatment agent 14 | 1 | 64 | A | S | A | A | A | A |
| Example 15 | A1050 | Treatment agent 15 | 1 | 65 | A | S | A | A | A | A |
| Example 16 | A1050 | Treatment agent 16 | 1 | 70 | A | S | A | A | A | A |
| Example 17 | A1050 | Treatment agent 17 | 1 | 70 | A | S | A | A | A | A |
| Example 18 | A1050 | Treatment agent 18 | 1 | 74 | A | S | A | A | A | A |
| Example 19 | A1050 | Treatment agent 19 | 1 | 81 | A | A | B | A | A | A |
| Example 20 | A1050 | Treatment agent 20 | 1 | 85 | A | A | A | A | A | A |
| Example 21 | A1050 | Treatment agent 21 | 1 | 84 | A | A | A | A | A | A |
| Example 22 | A1050 | Treatment agent 22 | 1 | 77 | B | B | A | A | A | A |
| Example 23 | A1050 | Treatment agent 23 | 1 | 85 | B | B | A | B | A | A |

| Test No. | Test plate | Treatment agent | Film thickness μm | Water contact angle ° | Evaluation item | | | | | | |
|---|---|---|---|---|---|---|---|---|---|---|---|
| | | | | | NSS | CASS | Acid resistance | Alkali resistance | Adhesion (before immersion in water) | Adhesion (after immersion in water) | |
| Example 24 | A1050 | Treatment agent 24 | 1 | 88 | B | B | A | A | A | A |
| Example 25 | A3102 | Treatment agent 7 | 1 | 70 | A | A | A | A | A | A |
| Example 26 | A3102 | Treatment agent 14 | 1 | 72 | A | A | A | A | A | A |
| Example 27 | A8011 | Treatment agent 7 | 1 | 77 | A | A | A | A | A | A |
| Example 28 | A8011 | Treatment agent 14 | 1 | 73 | A | A | A | A | A | A |
| Example 29 | A1050 | Treatment agent 15 | 3 | 86 | A | A | A | A | A | A |
| Comparative Example 1 | A1050 | Treatment agent 25 | 1 | 71 | C | C | C | C | C | C |
| Comparative Example 2 | A1050 | Treatment agent 26 | 1 | 65 | C | C | C | C | C | C |
| Comparative Example 3 | A1050 | - | - | 40 | C | C | C | C | - | - |
| Comparative Example 4 | A3102 | - | - | 45 | C | C | C | C | - | - |
| Comparative Example 5 | A8011 | - | - | 42 | C | C | C | C | - | - |

Table 3

| Test No. | Tese plate | Lower layer | | | Upper layer | | Evaluation item | | | | | |
|---|---|---|---|---|---|---|---|---|---|---|---|---|
| | | Treatment agent | Film thickness μm | Water contact angle ° | Treatment agent | Film thickness μm | NSS | CASS | Acid resistance | Alkali resistance | Adhesion (before immersion in water) | Adhesion (after immersion in water) |
| Example 30 | A1050 | Treatment agent 9 | 1 | 70 | Treatment agent 9 | 1 | A | S | A | A | A | A |
| Example 31 | A1050 | Treatment agent 17 | 1 | 70 | Treatment agent 17 | 1 | A | S | A | A | A | A |
| Example 32 | A1050 | Treatment agent 9 | 1 | 70 | Treatment agent 27 | 1 | A | A | A | A | A | A |
| Example 33 | A1050 | Treatment agent 9 | 1 | 70 | Treatment agent 27 | 2 | A | A | A | A | A | A |
| Example 34 | A1050 | Treatment agent 9 | 5 | 70 | Treatment agent 27 | 1 | A | A | A | A | A | A |
| Example 35 | A1050 | Treatment agent 9 | 5 | 70 | Treatment agent 27 | 5 | A | A | A | A | A | A |
| Example 36 | A1050 | Treatment agent 9 | 1 | 70 | Treatment agent 28 | 1 | A | A | A | A | A | A |
| Comparative Example 6 | - | - | - | - | Treatment agent 27 | 2 | C | C | C | C | C | C |
| Comparative Example 7 | - | - | - | - | Treatment agent 28 | 1 | C | C | C | C | C | C |

**Claims**

1. An aqueous surface treatment composition (X) for an aluminum material, comprising a resin (A) having a glass transition temperature of 35 °C or higher and a tensile storage modulus at 25 °C of 200 MPa or more and 2000 MPa or less.

2. The aqueous surface treatment composition (X) for an aluminum material according to claim 1, wherein the resin (A) has a molecular weight between crosslinking points of 450 or more and 4,500 or less.

3. The aqueous surface treatment composition (X) for an aluminum material according to claim 1 or 2, further comprising an inorganic compound (B), wherein a mass ratio (inorganic compound (B) / resin (A)) of the inorganic compound (B) to the resin (A) is 0.05 or more and 1.0 or less.

4. The aqueous surface treatment composition (X) for an aluminum material according to claim 3, wherein the inorganic compound (B) comprises at least one element selected from Si, Ti, and Zr.

5. The aqueous surface treatment composition (X) for an aluminum material according to any one of claims 1 to 4, further comprising an organic compound (C) having at least one functional group selected from an epoxy group, an amino group, an oxazoline group, and a carbodiimide group, wherein a mass ratio (organic compound (C) / resin (A)) of the organic compound (C) to the resin (A) is 0.05 or more and 1.0 or less.

6. The aqueous surface treatment composition (X) for an aluminum material according to any one of claims 1 to 5, wherein a concentration of the resin (A) in a total solid content is 25% by mass or more and 90% by mass or less.

7. The aqueous surface treatment composition (X) for an aluminum material according to any one of claims 1 to 6, wherein a minimum film-forming temperature is 10 °C or higher and 70 °C or lower.

8. A surface treatment film for an aluminum material, comprising a resin (A) having a glass transition temperature of 35 °C or higher and a tensile storage modulus at 25°C of 200 MPa or more and 2000 MPa or less.

9. The surface treatment film for an aluminum material according to claim 8, wherein the resin (A) has a molecular weight between crosslinking points of 450 or more and 4,500 or less.

10. The surface treatment film for an aluminum material according to claim 8 or 9, further comprising an inorganic compound (B), wherein a mass ratio (inorganic compound (B) / resin (A)) of the inorganic compound (B) to the resin (A) is 0.05 or more and 1.0 or less.

11. The surface treatment film for an aluminum material according to any one of claims 8 to 10, further comprising an organic compound (C) having at least one functional group selected from an epoxy group, an amino group, an oxazoline group, and a carbodiimide group, wherein a mass ratio (organic compound (C) / resin (A)) of the organic compound (C) to the resin (A) is 0.05 or more and 1.0 or less.

12. The surface treatment film for an aluminum material according to any one of claims 8 to 11, wherein a ratio (E'25°C / E'120°C) of the tensile storage modulus measured at 25 °C (E'25°C) to a tensile storage modulus measured at 120 °C (E'120°C) is 10 or more and 500 or less.

13. The surface treatment film for an aluminum material according to any one of claims 8 to 12, wherein a surface has a water contact angle of 40° or more and 100° or less.

14. A surface treated aluminum material, comprising the surface treatment film for an aluminum material according to any one of claims 8 to 13, with a film thickness of 0.2 $\mu$m or more and 5 $\mu$m or less.

15. The surface treated aluminum material according to claim 14, further comprising another film with a film thickness of 0.4 $\mu$m or more and 5 $\mu$m or less obtained by contacting on or above a surface of the surface treatment film with another surface treatment composition (Y) and then drying at 100 °C or more and 250 °C or less.

16. The surface treated aluminum material according to claim 15, wherein the surface treatment composition (Y) has a surface tension of 20 mN/m or more and 50 mN/m or less.

# EP 4 491 690 A1

| | INTERNATIONAL SEARCH REPORT | International application No. |
|---|---|---|
| | | **PCT/JP2023/006835** |

**A. CLASSIFICATION OF SUBJECT MATTER**

*C09D 201/00*(2006.01)i; *F28F 19/04*(2006.01)i; *C09D 7/61*(2018.01)i; *C09D 7/63*(2018.01)i; *C23C 26/00*(2006.01)i
FI: C09D201/00; C23C26/00 A; C09D7/61; C09D7/63; F28F19/04

According to International Patent Classification (IPC) or to both national classification and IPC

**B. FIELDS SEARCHED**

Minimum documentation searched (classification system followed by classification symbols)

C09D1/00-201/10; F28F19/04; C23C26/00-26/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-285666 A (NIPPON PARKERIZING CO LTD) 24 December 2010 (2010-12-24)<br>claims 1, 4, 9, paragraph [0015], tables 1-3 | 1-16 |
| A | JP 2007-51323 A (NIPPON PARKERIZING CO LTD) 01 March 2007 (2007-03-01)<br>claims 1, 2, 12, paragraph [0009], tables 1-3 | 1-16 |
| A | JP 2003-321646 A (TOYO SEIKAN KAISHA LTD) 14 November 2003 (2003-11-14)<br>claims 1, 3, 11, examples | 1-16 |
| A | US 2013/0269874 A1 (BUCHNER, Joerg) 17 October 2013 (2013-10-17)<br>claims 16 ,23, 27, paragraphs [0078]-[0097] | 1-16 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **24 April 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/006835**

| Patent document cited in search report | | | Publication date (day/month/year) | Patent family member(s) | | | Publication date (day/month/year) |
|---|---|---|---|---|---|---|---|
| JP | 2010-285666 | A | 24 December 2010 | (Family: none) | | | |
| JP | 2007-51323 | A | 01 March 2007 | EP claims 1, 2, 12, paragraph [0009], tables 1-3 CN KR WO | 1959030 10138677 10-2008-0028997 2007/020762 | A1 A A A2 | |
| JP | 2003-321646 | A | 14 November 2003 | (Family: none) | | | |
| US | 2013/0269874 | A1 | 17 October 2013 | WO claims 1, 8, 12 CN | 2012/062741 103249751 | A1 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007239016 A
- JP 2005008948 A
- JP 2009107311 A
- WO 2017081731 A1